(19) Europäisches Patentamt
European Patent Office
Office européen des brevets

(11) **EP 2 090 164 B1**

(12) **EUROPEAN PATENT SPECIFICATION**

(45) Date of publication and mention
of the grant of the patent:
**07.12.2011 Bulletin 2011/49**

(51) Int Cl.:
*A01N 25/00* ^(2006.01)     *A01N 43/16* ^(2006.01)

(21) Application number: **09152774.7**

(22) Date of filing: **13.02.2009**

(54) **A rodenticide bait based on a synergetic association of anticoagulant active ingredients**

Nagetiergiftköder auf Basis einer synergistischen Assoziation von blutgerinnungshemmenden aktiven Zutaten

Appât rodenticide basé sur une association synergique d'ingrédients actifs anticoagulants

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **15.02.2008 IT MI20080238**

(43) Date of publication of application:
**19.08.2009 Bulletin 2009/34**

(73) Proprietor: **Zapi Industrie Chimiche S.p.A.**
**35026 Conselve (Padova) (IT)**

(72) Inventors:
• **Tagliaro, Massimo**
**35020 Albignasego (Padova) (IT)**

• **Zambotto, Pierpaolo**
**35025 Cartura (Padova) (IT)**

(74) Representative: **Coppo, Alessandro**
**Murgitroyd & Company**
**Piazza Borromeo 12**
**20123 Milano (IT)**

(56) References cited:
**EP-A- 1 279 334     GB-A- 2 184 020**

Remarks:
The file contains technical information submitted after the application was filed and not included in this specification

**Description**

**FIELD OF THE INVENTION**

The present invention relates to a rodenticide bait based on a synergetic association of anticoagulant active ingredients.

The invention originates in the field of products for preventing and treating infestations by the murine species.

Specifically, the present invention relates to a rodenticide bait containing selected anticoagulant active ingredients which, in combination, develop synergy in a disinfesting action.

**BACKGROUND OF THE INVENTION**

The problem of mice and rats infestations has become notoriously one of the sanitary priorities, especially in urban centers, where adequate hygienic-sanitary standards must be ensured.

Rats and mice not only live a parasitic life, that impoverishes available food resources, but also they are carriers of diseases injurious to humans or domestic animals.

As a consequence, over the years there have been developed various disinfestation systems, both of physical/electronic and chemical types.

Physical Means

Mechanical traps, glues and ultrasounds are known among the physical means available for controlling the infestations.

The first ones currently find application mainly in a census of infesting species and the number of appearances . It is recommended to distribute a fair amount thereof in transit ways, baiting them with different food substances.

The glues are adhesive substances that can be useful in case of not massive infestations and in cases in which the use of chemical rodenticide is not advisable. High environment temperatures and dustiness of rooms are the main disadvantages that reduce their effectiveness.

Electronic Means

As far as ultrasound use is concerned, it has been found that the murine species gets rapidly inured to the typical frequencies used, those over 20 MHz, not perceptible to the human ear. In addition, it has been found that the sound annoyance is more irritating for domestic animals than for rodents.

Chemical Means

The available chemical disinfesting means can be subdivided into the following classes:

I. Repellents,
II. Attractants,
III. Chemosterilants,
IV. Rodenticides.

I. Repellents

From among many tested substances, actidione, trinitrobenzene-aniline, thiouram disulfide, hexachlorophene and various dithiocarbamates have proven to be particularly active.

However, the repellents alone do not manage to solve the infestation problem, because the rodents repelled from one determined area, escape to another one.

II. Attractants

The attractants are used to attract the animals to precise places, overcoming the natural and innate suspiciousness of the murine species. Generally, there are two groups of most commonly used substances: pheromones, natural specific smells, and compounds not connected to natural hormonal smells. The not pheromonal substances used include: vegetable oils of various kinds, sugar, molasses, glycerol, salt, sodium glutamate, etc. Besides the pheromones, other volatile substances have proven to have good attractant efficacy and among them there is carbon disulphide, which is effective in increasing the bait consumption.

III. Chemosterilants

The chemosterilants have been finding application in more recent times. For example, the use of triethylene melamine is known, but it has a limit of not being able to sterilize males and females at the same time. The chemosterilants have also the limit of not being effective in only one administration. Although capable of eliminating up to 85% of the treated murine population and causing permanent sterility in surviving adult males, α-chlorohydrin is not active on the young prepubertal, on the females of Rattus norvegicus and on both genders and all ages of the Mus musculus.

In addition to these limitations, the chemosterilants cannot be used in case of massive infestation or where the presence of even a single Mus musculus cannot be tolerated.

IV. Rodenticides

The wide class of chemical rodenticide products can be divided in two main categories: A) acute or single dose rodenticides and B) chronic (anticoagulants) or multiple-dose rodenticides.

A) Acute rodenticides (Poisons)

Natural poisons (A') and synthetic poisons (A") belong to the first category: the natural ones (A') include scilliroside and strychnine, while synthetic poisons (A") include crimidine, sodium fluoroacetate and fluoroacetamide, zinc phosphide, norbomide, thallium sulfate and ANTU.

Although acute rodenticides A) are not effective as the chronic ones B), they can be validly used in emergency situations, when the rat population must be destroyed in the shortest time. However, they have many disadvantages, among which stands out extreme dangerousness for man and non-target species and increase of the rodents' suspiciousness.

B) Chronic rodenticides (Anticogulants)

Therefore, the most effective and most used instruments for fighting against rats remain poisoned preparations containing chronic rodenticides B), which typically contain a single anticoagulant active ingredient. These preparations take advantage of a mode of action that does not occur before 2-3 days after the ingestion, independently from the quantity of the ingested food.

The chronic rodenticides are anticoagulants that can be subdivided, according to the mode of action, into B1) first generation anticoagulants (multiple dose) and B2) second generation anticoagulants (single dose).

B1) First Generation Anticoagulants

Warfarin, coumachlor , coumatetralyl, coumafuryl, pivaldione, diphacinone and chlorophacinone belong to the first set.

B2) Second Generation Anticoagulants

Bromadiolon, diphenacoum, brodifacoum and the most recent difethialone and flocoumafen belong to the second set.

The Baits

Previously described rodenticides are produced in form of baits to be assimilated by the infesting murine species.
The baits are produced by combining a rodenticide with a component (carrier) having a phagocytic baiting effect.
The stronger the baiting effect and the tastiness of the baiting component, the higher the possibility of a successful result. In order to increase the bait attractiveness and palatability, particular flavors, fruit, animal proteins, vegetable oils and sugar are used. Finally, other substances such as preservatives, coloring and bitter agents can be added. Different types of baits exist.
A combined bait with a rat-poisoning action comprising as active ingredient rodenticides with a concentration range of active ingredients of 0.001 to 0.01% is disclosed in the European patent application EP 1 279 334 A1.
The UK patent application GB 2 184 020 A discloses a rodenticidal bait comprising a rodenticide and a synthetic pear flavor causing a strong attraction for rodents and optionally an edible carrier.

i) Cereals

Cereals are used as baiting means, since they constitute the base of rodents' diet in many environmental contexts. Those most advisable in the fight against rats are without teguments, in order to facilitate complete absorption of the active ingredient. Use of caryopsides covered with teguments is in fact to be avoided, since the latter, covering the seed, prevent also its complete imbibition by the active ingredient, making the rodent eat the seed without assuming the active ingredient, after having discarded the teguments.

Typically, whole or pulverized cereals are contained in packets of paper or plastic transpirable material, so as to facilitate product optimal preservation, simplicity of the bait substitution and a smaller risk of dispersal in the environment.

However, use of rat-poison baits in form of cereals is not without disadvantages, mainly due to poor uniformity of the active ingredient distribution on the baiting component and the possibility of finding insect infestations. Furthermore, as it is very easy for rodents to move the grains or flakes and accumulate them in areas, which can be even several meters distant from the poisoning station, serious risks of contamination intervene when operating in the presence of foodstuffs.

ii) Flaked Bait

A flaked and pulverized bait is composed of a mixture of flaked cereals and crumbled and pulverized grains and other highly attractive food components. The used components are: flaked wheat and oats enriched with baiting substances, sugar, whole wheat, sunflower seeds. The presence of different components increases the possibilities that the target animal will detect a particularly appreciated one among them, and begins to eat it.

iii) Pellets

The pellets are produced starting with pulverization of cereals. Afterwards, the cereals powder and the active ingredient are mixed together with thickening substances and animal and vegetable proteins, and then the mixture is drawn. The palatability of the so obtained baits can be generally compared with that of the whole cereals, although the pellets have bigger hardness and a more uniform diffusion of the active ingredient in the bait with respect to the whole cereals. The product hardness satisfies the mice and rats' need for gnawing.

However, the pulverized and the pellets have a disadvantage, because they require the use of suitable containers, so as to avoid their dispersion in the environment. Actually, if they were used outside, the rain would make release the active ingredient, non only making the bait useless, but also polluting the ground and water tables.

iv) Paraffinized baits

Paraffinized baits are compounds, in which the rodenticide active ingredient and other ingredients are mixed with paraffin. These formulations have been developed with the intent of limiting the rodenticide baits perishability, especially in environments with a high degree of humidity.

However, these formulations have rather low palatability. The paraffinized bait can be obtained, according to a conventional technology, by mixing the melted paraffin with other ingredients, then casting the mixture into molds, where it hardens. However, it has been noted that the high contents of paraffin (up to 50%), the strong heating, to which the ingredients were subjected, and their not homogeneous distribution in the bait, reduce significantly its palatability.

Alternatively, two alternative formulating techniques can be used, which allow paraffinized baits to be obtained with good palatability: the compression technique (ovules) and the extrusion technique, which gives blocks which can be fixed in the poisoning stations, preventing the rodents from removing the blocks easily.

The paraffinized baits, although particularly suitable for external use, since they incorporate the active ingredient in the paraffin, and do not allow water to extract it, have the disadvantage of liquefying due to the exposition to the sunbeams, and thus they disperse the active ingredient in the environment during the rains.

v) Track or contact powders

Track or contact powders have been conceived to be placed on the rodents' habitual paths or blown into their holes. The rodent, once covered with the powder, undoubtedly tries to clean itself using the tongue and thereby they assume the active ingredient.

Although the powders are extremely effective in controlling the rodents, currently the system is scarcely used due to high risk of environmental contamination.

vi) Gel Baits or Fat Bait

Baits having gel formulation or fat baits have a good palatability and a very important quality, deriving from the fact that they cannot be transferred by the rodents. Moreover, they remain fresh for a long time. In some cases, the fresh gel bait or fat bait can make use of the same mechanism of the powder, whereby the rat, trying to clean its hair with the tongue, swallows the active ingredient.

Liquid concentrate compounds are indicated for bait production and are mixed with attractive substances, which can vary according to the food habits of the mice and/or rats population to be fought. The liquid contains coloring agents (blue, green, red) to give color to the baits.

vii) Paste baits (fresh bait or fresh paste)

The paste bait is a preparation in the form of paste, having powdery consistence, amalgamated with animal and vegetable fats, and to which antioxidant substances are added to prevent it from becoming rancid. These baits are packaged in packets of filter paper that makes easy their positioning.

The paste bait contains all ingredients most palatable for rodents and by virtue of its rather oily consistence it has optimal palatability in many situations, especially when only dry food is available. Packaging in filters or packets allows a baiting diffusion of the aromas and attractant substances contained therein.

The paste bait has however the disadvantage that it not always ensures an adequate disinfesting action, since not always the rodenticide active ingredient contained therein is assimilated in a quantity high enough to achieve the lethal effect on the mouse/rat.

In order to overcome this drawback, formulations containing higher doses of anticoagulant have been introduced. However, it has been noted that increasing the quantity of anticoagulant in the bait leads to the growth of the risk of intoxication of also non target species, such as game, breeding animals and domestic ones, which can eat the poisoned bait by chance.

## SUMMARY OF THE INVENTION

Therefore, in the current state, a need exists to have rodenticide formulations with high disinfesting action and low toxicological profile for the non target species.

A general object of the present invention is to propose a rodenticide formulation, that is highly palatable for the most common infesting murine species and that, at the same time, has strong disinfesting action specific for the most common rat and mouse infesting species.

One of the main objects of the present invention is to provide a rodenticide bait based on a synergetic association of anticoagulant active ingredients highly effective towards the infesting murine species and relatively safe for non target animal species.

Another object of the present invention is to provide a paraffinized bait obtained by extrusion, containing a combination of anticoagulant active ingredients, having specific action towards the most common infesting murine species.

In consideration of these objects, a rodenticide bait, based on a synergetic association of anticoagulant active ingredients, is therefore provided, according to a first aspect of the invention, **characterized in that** it comprises bromadiolon and diphenacoum in an effective disinfesting quantity, and a carrier palatable for infesting murine species.

Other specific characteristics and embodiments of the bait of the invention can be found in the enclosed dependent claims 2-10.

The Applicant has surprisingly found that using two selected anticoagulants in association, in a rat/mouse-poison bait, not only a synergetic disinfesting effect is obtained, but also a reduction of the toxicity towards other, non murine species, that take the bait by chance.

In other words, using the anticoagulants bromadiolon and diphenacoum in the same formulation, with the same total concentration of the anticoagulant in the compound, the possible toxic effects on animals, different from the mice and rats, that would ingest the formulation by chance, are reduced.

In particular, it has been found by a performed analysis that the toxicity in a dog of a bait containing bromadiolon and diphenacoum, for example both in quantity 0.0025%, has proven to be up to 66 times lower with respect to the toxicity in a dog of the baits containing brodifacoum in the same absolute percentage value (0.0050%).

The active ingredients bromadiolon and diphenacoum are anticoagulants of second generation, belonging to the family of the 4-hydroxy-coumarin derivatives; they act delaying or preventing the coagulation of the blood, causing death by internal hemorrhages. The action mechanism is based on the interference with the coagulation factors, that require the presence of vitamin K: thus, in case of intoxication, the only effective antidote is the administration of vitamin K.

The Applicant has also found that while diphenacoum and bromadiolon, when taken each alone in the same amount, carry on a disinfesting action that is inferior with respect to that of the anticoagulant brodifacoum, one of the most effective active ingredients available on the market, when said two active ingredients are formulated in association, they develop a synergetic disinfesting action, at least equal to that of the same brodifacoum.

In the rodenticide bait of the invention, the two anticoagulant active ingredients are suitably mixed with the carrying substance/s palatable for the target murine species.

The term carrier palatable for the infesting murine species includes one or more substances, which are suitable for carrying the anticoagulant active ingredients of the bait and which, being also palatable for the most common infesting murine species, act as baiting component of the bait.

## DETAILED DESCRIPTION OF THE INVENTION

According to an embodiment, the two anticoagulant active ingredients are mixed with the baiting component of the bait of the invention, so that the mouse/rat, assuming this edible component, swallows also said anticoagulants in an amount sufficient to cause an internal hemorrhage that determines the rat/mouse death.

The two active ingredients are suitably present in the bait of the invention in the smallest amount to achieve an anticoagulant effect, when swallowed by the target species.

The amount necessary to determine the rat or mouse death varies from one subject to another and is a function of its dimensions, of the species, of the animal's general conditions.

However, it has been noted the using bromadiolon in a quantity in a range of 0.0010 to 0.0040% by weight and diphenacoum in a quantity in a range of 0.0010 to 0.0040% by weight, adequate results in terms of disinfestation are obtained.

According to an embodiment, the rodenticide bait of the invention includes bromadiolon in a quantity in a range of 0.0020 to 0.0030% by weight and diphenacoum in a quantity in a range of 0.0020 and 0.0030% by weight.

According to a specific embodiment, the rodenticide bait of the invention comprises bromadiolon at 0.0025% by weight and diphenacoum at 0.0025% by weight. It is also possible to provide amounts of anticoagulants in the formulation of the bait of the invention smaller or bigger than those previously described, according to the specific needs.

The advantages obtained using said two anticoagulants at the same time, can be traced back to the fact that the presence of two active ingredients, in the concentration equal to the half of the usually used one, can reduce the toxicity towards the non target species.

Furthermore, the use of anticoagulants with a different chemical formula reduces significantly the phenomena of mice and rats resistance to the rodenticides and the synergetic composition can be made specific in the treatments, where resistance phenomena appear in a considerable way.

For example, the rodents, in particular the Mus musculus, have developed resistance to the anticoagulant active ingredients, which made it necessary to research into more and more effective products.

In the bait of the invention, the association of different anticoagulants (diphenacoum and bromadiolon) has an effect on both the rodents that have become "resistant" to diphenacoum and the rodents that have become "resistant" to bromadiolon.

According to an embodiment, the bait of the invention is provided in the form of paraffinized baits. These are compounds having a good palatability, in which said two anticoagulant active ingredients, together with other possible ingredients, are mixed with the paraffin.

Typically, these compounds have the quality of reducing the bait perishability, especially in environments with a high degree of humidity.

It has also been found, from the field tests of efficacy and palatability, that the paraffinized baits (paraffinized block) of the invention, containing the two anticoagulant active ingredients, have a definitely greater palatability with respect to paraffinized baits containing brodifacoum in the same amount (the absolute values of the anticoagulants present in the two compounds were identical). The performed tests make believe that the common infesting species of mice and rats perceive the presence of brodifacoum in the paraffinized bait (e.g. at 0.005%) while they do not perceive the presence of bromadiolon + diphenacoum in the same absolute amount (e.g. in amount of 0.0025% + 0.0025% for a total of 0.0050% of total anticoagulants present in the bait).

It appears from what has been reported previously, how the rodenticide bait of the invention achieves a series of advantages in terms of at least equal efficacy with the same absolute amount of ingested anticoagulant, greater use safety (up to 66 times more) and better palatability. The last advantage is particularly referable to the compounds in paraffin or in paraffinized block.

According to an embodiment of the invention, the paraffinized baits can be obtained by the compression technique (ovules) or by the extrusion technique (of paraffin, preferably in pellets).

The latter technique, preferable to the compression one, allows disinfesting paraffinized blocks to be obtained, which can be fixed inside the poisoning stations and which cannot be transported easily by the rodents.

According to another embodiment, the bait of the invention is provided in the form of paste bait or fresh bait.

It is a paste of a floury consistency, mixed with animal and vegetable fats, to which antioxidant products are suitably added to prevent them from becoming rancid.

Typically, the paste formulation contains one or more ingredients palatable for rodents and by virtue of its rather oily consistence it has optimal palatability in many situations, especially when only dry food is available. Packaging in filters or packets allows a baiting diffusion of the aromas and attractant substances contained therein.

According to another embodiment, the bait of the invention is in the form of grains (typically wheat), grains in flakes and mixtures thereof.

The bait of the invention can also include one or more substances chosen from among additives, sweeteners, coloring agents, fats, fibers and mixtures thereof.

According to a still further embodiment, the bait of the invention can comprise one or more further anticoagulant active ingredients, for example as a substitute of one of the two above mentioned active ingredients or, still better, together with them.

According to another aspect of the invention, the use of bromadiolon and diphenacoum is provided for the production of a composition or a preparation, in which said two active ingredients carry out a synergetic action of rats and/or mice disinfestation. Further characteristics and specific embodiments included in this aspect of the invention are defined in the appended dependent claims 11-16.

In particular, the two active ingredients used within the scope of the invention, bromadiolon and diphenacoum are 4-hydroxy-coumarin derivatives, whose long action is determined by high lipophilicity, high affinity to hepatic tissue, and accordingly, to a very slow excretion from the organism. These are all molecules characterized by very long half-life periods, without particular differences between rodents and dog, and by a very long anticoagulant action, which continues also when the anticoagulant molecule can no longer be found in the blood.

Their power is very high and their anticoagulant effect is determined by their capability of inhibiting vitamin K epoxide reductase, an enzymatic compound responsible for the transformation of vitamin K-2,3-epoxide into vitamin K hydroquinone, that in turn represents a cofactor necessary for the activation of other cofactors for coagulation II, VII, IX, X.

The long-acting anticoagulant rodenticides (LAAR - long-acting anticoagulant rodenticides), to which belong bromadiolon and diphenacoum, in most animal species, man included, are characterized by a very high gastrointestinal absorption (> 90%; the plasmatic peak appears within 12 hours after the ingestion). The differences between the animal species are minimal. The majority of these rodenticides have high percentages of bond to serum proteins 90%) and is subjected to hepatic metabolism, with formation of inactive metabolites (hydroxylated products) by the cytochrome P-450-dependent mixed function oxidases.

The diphenacoum half-life in man is equal to 11.5 days, however it seems that the half-life of these rodenticides can be shortened with the administration of phenobarbital, probably as a consequence of the enzymatic induction determined by the latter.

Diphenacoum is a molecule characterized by two isomeric forms (*cis* and *trans*); the liver is the place of the biggest accumulation of the molecule both in unchanged form and as inactive metabolites. The main elimination way is constituted by the faeces. The trans isomer is quickly metabolized and eliminated by the cis isomer. The elimination from both liver and kidney is characterized by a two-phase course, with a rather rapid initial phase (3 days), followed by a second, much slower, phase (118-120 days); the levels of diphenacoum in the pancreas are reduced even more slowly, with a half-life equal to 182 days (WHO, 1995).

Bromadiolon, similarly to diphenacoum, is characterized by a two-phase course elimination from the liver, it would be subjected to lower hepatic metabolism with respect to diphenacoum. For both molecules, faecal excretion and the amount of metabolites that are being formed depend on the dose as well as on the time.

The Italian priority Application MI2008A000238, filed on 15 February 2008 by the same Applicant is reported here in its entirety.

The following examples are provided for purely illustrative purpose of the present invention and must not be understood as limiting the protection scope.

EXAMPLE 1

Paraffin blocks bait containing

| | |
|---|---|
| Bromadiolon | 0.0025% |
| Diphenacoum | 0.0025% |
| Paraffin | 40.00% |
| Baiting substances | 5.92 |

(continued)

| | |
|---|---|
| Sweeteners | 5.00% |
| Stabilizers | 0.075% |
| vegetable flours | 47.00 |
| preservatives | 2.000% |

EXAMPLE 2

Formulation of a rodenticide composition in farinaceous pellet

| | |
|---|---|
| vegetable flours | 85.864% |
| calcium lignosulphite | 3% |
| Inerts | 10% |
| propylene glycol | 1% |
| stabilizers | 0.03% |
| possible natural and/or chemical insecticide substance | 0.1% |
| preservatives | 2% |
| Bromadiolon | 0.0025% |
| Diphenacoum | 0,0025% |
| denatonium benzoate | 0.001% |

Example 3

Bait in the form of fresh paste containing

| | |
|---|---|
| Bromadiolon | 0,0020% |
| Diphenacoum | 0.0020% |
| vegetable flours | 49.1565 |
| baiting substances | 12.500% |
| preservatives | 2.000% |
| stabilizers | 0.075% |
| animal or vegetable fat | 25.000% |
| sweeteners | 11.2635% |
| denatonium benzoate | 0.001% |

Example 4

A toxicological profile has been assessed of 2 rodenticide compounds according to the invention (of the type of the examples 1 and 2), based on the synergetic association of bromadiolon 0.0025% and diphenacoum 0.0025% in comparison with baits of the prior art, containing only one anticoagulant, brodiphacoum in amount of 0.0050%.

The compounds under test, according to the invention, had the following centesimal composition:

| | |
|---|---|
| 100 grams of product contain: | |
| Pure bromadiolon | g 0.0025 |
| Pure diphenacoum | g 0.0025 |
| Denatonium benzoate | g 0.0010 |
| Coformulants, baiting and appetizing substances as much as will suffice | g 100.00 |

As far as toxicity analysis of baits containing such an association is concerned, since experimental data are not available, mathematical calculations on the basis of formulas obtained from the A.D.R. European Agreement have been used.

A.D.R. is the acronym of Accord Dangereuses Route, that is the European Agreement concerning the International Carriage of Dangerous Goods by Road, signed in Geneva, on the 30 September, 1957 and ratified in Italy with the act 12 August 1962, no. 1839.The European Union, with the directive no. 94155/CEE of the 21.11.1994, adopted in Italy with Minister for Transport decree of 4.9.1996, has made application of the rules contained in the enclosures to the Agreement A.D.R. mandatory also in the single States.

According to the contents of this Agreement, if a mixture contains only one active matter, the $LD_{50}$ of which is known, in the absence of reliable data on acute toxicity due to ingestion or cutaneous absorption of the mixture, it is possible to obtain the $LD_{50}$ due to ingestion or cutaneous absorption according to the following method:

$$DL_{50}\,miscela = \frac{DL_{50}\,p.a.\times100}{\%\,p.a.(massa)}$$

If a mixture contains more than one active matter, it is possible to use three possible methods to calculate its LD50 due to ingestion or cutaneous absorption. The advisable method is to obtain reliable data on the acute toxicity due to ingestion or cutaneous absorption related to the mixture being considered. If there are no precise reliable data, one of the following methods will be used:

   a. classify the mixture depending on the most dangerous constituent, as if it were present in a concentration equal to the total one of all the active constituents; or
   b. apply the formula:

$$\frac{CA}{TA}+\frac{CB}{TB}+...+\frac{CZ}{TZ}=\frac{100}{TM}$$

   in which
   C = concentration in % of the constituent A, B, ..., Z of the mixture
   T = LD50 due to ingestion of the constituent A, B,...,Z;
   TM = LD50 due to ingestion of the mixture.

The Lethal Dose 50 (LD50) indicates the amount of a determined dangerous substance able to cause the death of 50% of the experimental animals of a given species, treated with the chemical substance, considered and administrated by a given way of administration (oral to rats). It is expressed in milligrams of active ingredient per kilo of animal bodyweight (mg/kg).

The data on LD50 summarized in the Table 1, are deduced from the data present in "The Pesticide Manual", XIV ed. (2006) on the toxicity of the anticoagulants.

**Table 1.** Values of LD50 of brodifacoum, bromadiolon and diphenacoum (as active ingredients).

|  | a.p. LD50 (mg/kg) | | | |
|---|---|---|---|---|
|  | rat | mouse | dog | cat |
| BRODIFACOUM | 0.4 | 0.4 | 0.25-3.6 | 25 |
| BROMADIOLON | 1.125 | 1.75 | >10.0 | >25 |
| DIPHENACOUM | 1.8 | 0.8 | >50.0 | >100 |

By applying the previous formulas to the compounds containing 0.005% of brodifacoum and the compounds of the invention based on the association bromadiolon 0.0025% + diphenacoum 0.0025%, the LD50 values is obtained for each single active ingredient and for the association bromadiolon 0.0025% + diphenacoum 0.0025%, summarized in the following Table 2.

Table 2. LD50 values of brodifacoum, bromadiolon, diphenacoum, and the association bromadiolon 0.0025% + diphenacoum 0.0025% (composition 1 or bait of the invention).

| | BAIT LD50 (g/kg) | | | |
|---|---|---|---|---|
| | rat | mouse | dog | cat |
| BRODIFACOUM | 8 | 8 | 5-72 | 500 |
| BROMADIOLON | 22.5 | 35 | >200 | >500 |
| DIPHENACOUM | 36 | 16 | >1000 | >2000 |
| COMPOSITION 1 | 27.69 | 21.96 | 333.33 | 800 |

Consequently, it results that the composition 1 based on the association bromadiolon 0.0025% +diphenacoum 0.0025% is characterized by a toxicity in a dog up to 66 times lower with respect to that of the rat-poison based only on brodifacoum 0.005%.

For a further support of the lower toxicity of the association diphenacoum-bromadiolon contained in the baits of the invention, calculated mathematically and deriving from the application of the formula proposed in the A.D.R. Agreement, it is underlined that dogs is an animal species characterized by a much lower sensibility to the two anticoagulants in question, with respect to rat and mouse.

**Claims**

1. A rodenticide bait, based on a synergetic association of anticoagulant active ingredients, **characterized in that** it comprises bromadiolon and diphenacoum in an effective disinfesting amount and a carrier palatable for infesting murine species.

2. A rodenticide bait according to claim 1, **characterized by** including bromadiolon in an amount in a range of 0.0010 to 0.0040% by weight and diphenacoum in an amount in a range of 0.0010 to 0.0040% by weight.

3. A rodenticide bait according to claim 1 or 2, **characterized by** including bromadiolon in an amount in a range of 0.0020 to 0.0030% by weight and diphenacoum in an amount in a range of 0.0020 to 0.0030% by weight.

4. A rodenticide bait according to any of claims 1-3, **characterized by** including 0.0025% by weight of bromadiolon and 0.0025% by weight of diphenacoum.

5. A rodenticide bait, according to any of claims 1-4, **characterized in that** it is a paraffinized bait.

6. A rodenticide bait, according to claim 5, **characterized in that** it is obtained by paraffin extrusion.

7. A rodenticide bait, according to any of claims 1-4, **characterized in that** it is a paste bait.

8. A rodenticide bait, according to any of claims 1-4, **characterized in that** it is in the form of grains, flakes, composite and mixtures thereof.

9. A rodenticide bait, according to any of claims 1-8, **characterized by** further including one or more substances selected from additives, sweeteners, coloring agents, fats, fibers and mixtures thereof.

10. Use of bromadiolon and diphenacoum for the production of a synergetic composition for rat and/or mouse disinfestation.

11. Use, according to claim 10, wherein bromadiolon is used in an amount of 0.0010 to 0.0040% by weight and diphenacoum in an amount of 0.0010 to 0.0040% by weight.

12. Use, according to claim 11, wherein bromadiolon is used in an amount of 0.0020 to 0,0030% by weight and diphenacoum in an amount of 0.0020 to 0,0030% by weight.

**13.** Use, according to claim 11 or 12, wherein bromadiolon is used in an amount of 0.0025% by weight and diphenacoum in an amount of 0.0025 by weight.

**14.** Use, according to any of claims 10-13, wherein said synergetic composition is a block paraffinized bait or bait in the form of paste.

**15.** Use, according to any of claims 10-14, wherein said composition further comprises at least another multiple dose anticoagulant selected from the group comprising warfarin, coumachlor, coumatetralyl, coumafuryl, pivaldione, diphacinone chlorophacinone and mixtures thereof, or a single dose anticoagulant selected from brodifacoum, difethialone, flocoumafen and mixtures thereof or mixtures of a multiple dose anticoagulant with a single dose one.

**Patentansprüche**

**1.** Ein Rodentizidköder auf der Basis einer synergetischen Vereinigung von gerinnungshemmenden Wirkstoffen, **dadurch gekennzeichnet, dass** er Bromadiolon und Difenacoum in einer wirksamen Desinfestationsmenge und einen Träger, der für infestierende murine Arten schmackhaft ist, beinhaltet.

**2.** Rodentizidköder gemäß Anspruch 1, **gekennzeichnet durch** Umfassen von Bromadiolon in einer Menge in einem Bereich von 0,0010 bis 0,0040 Gew.-% und Difenacoum in einer Menge in einem Bereich von 0,0010 bis 0,0040 Gew.-%.

**3.** Rodentizidköder gemäß Anspruch 1 oder 2, **gekennzeichnet durch** Umfassen von Bromadiolon in einer Menge in einem Bereich von 0,0020 bis 0,0030 Gew.-% und Difenacoum in einer Menge in einem Bereich von 0,0020 bis 0,0030 Gew.-%.

**4.** Rodentizidköder gemäß einem der Ansprüche 1-3, **gekennzeichnet durch** Umfassen von 0,0025 Gew.-% Bromadiolon und 0,0025 Gew.-% Difenacoum.

**5.** Rodentizidköder gemäß einem der Ansprüche 1-4, **dadurch gekennzeichnet, dass** er ein paraffinierter Köder ist.

**6.** Rodentizidköder gemäß Anspruch 5, **dadurch gekennzeichnet, dass** er durch Paraffinextrusion erhalten wird.

**7.** Rodentizidköder gemäß einem der Ansprüche 1-4, **dadurch gekennzeichnet, dass** er ein Pastenköder ist.

**8.** Rodentizidköder gemäß einem der Ansprüche 1-4, **dadurch gekennzeichnet, dass** er in Form von Körnern, Flokken, Zusammengesetztem und Mischungen davon vorliegt.

**9.** Rodentizidköder gemäß einem der Ansprüche 1-8, **gekennzeichnet durch** weiteres Umfassen einer oder mehrerer Substanzen, die aus Zusatzstoffen, Süßstoffen, Färbungsmitteln, Fetten, Fasern und Mischungen davon ausgewählt sind.

**10.** Eine Verwendung von Bromadiolon und Difenacoum für die Produktion einer synergetischen Zusammensetzung für die Ratten- und/oder Mäusedesinfestation.

**11.** Verwendung gemäß Anspruch 10, wobei Bromadiolon in einer Menge von 0,0010 bis 0,0040 Gew.-% und Difenacoum in einer Menge von 0,0010 bis 0,0040 Gew.-% verwendet wird.

**12.** Verwendung gemäß Anspruch 11, wobei Bromadiolon in einer Menge von 0,0020 bis 0,0030 Gew.-% und Difenacoum in einer Menge von 0,0020 bis 0,0030 Gew.-% verwendet wird.

**13.** Verwendung gemäß Anspruch 11 oder 12, wobei Bromadiolon in einer Menge von 0,0025 Gew.-% und Difenacoum in einer Menge von 0,0025 Gew.-% verwendet wird.

**14.** Verwendung gemäß einem der Ansprüche 10-13, wobei die synergetische Zusammensetzung ein paraffinierter Blockköder oder ein Köder in der Form einer Paste ist.

**15.** Verwendung gemäß einem der Ansprüche 10-14, wobei die Zusammensetzung ferner mindestens einen weiteren Mehrfachdosengerinnungshemmer, ausgewählt aus der Gruppe, die Warfarin, Coumachlor, Coumatetralyl, Coumafuryl, Pivaldion, Diphacinon, Chlorphacinon und Mischungen davon beinhaltet, oder einen Einzeldosengerinnungshemmer, ausgewählt aus Brodifacoum, Difethialon, Flocoumafen und Mischungen davon, oder Mischungen aus einem Mehrfachdosengerinnungshemmer mit einem Einzeldosengerinnungshemmer beinhaltet.

**Revendications**

1. Un appât rodenticide, basé sur une association synergétique de matières actives anticoagulantes, **caractérisé en ce qu'**il comprend de la bromadiolone et du difénacoum dans une quantité efficace pour la désinfestation et un excipient appétent pour les espèces murines infestantes.

2. Un appât rodenticide selon la revendication 1, **caractérisé par** l'inclusion de bromadiolone dans une quantité comprise dans une gamme allant de 0,0010 à 0,0040 % en poids et de difénacoum dans une quantité comprise dans une gamme allant de 0,0010 à 0,0040 % en poids.

3. Un appât rodenticide selon la revendication 1 ou la revendication 2, **caractérisé par** l'inclusion de bromadiolone dans une quantité comprise dans une gamme allant de 0,0020 à 0,0030 % en poids et de difénacoum dans une quantité comprise dans une gamme allant de 0,0020 à 0,0030 % en poids.

4. Un appât rodenticide selon n'importe lesquelles des revendications 1 à 3, **caractérisé par** l'inclusion de 0,0025 % en poids de bromadiolone et de 0,0025 % en poids de difénacoum.

5. Un appât rodenticide, selon n'importe lesquelles des revendications 1 à 4, **caractérisé en ce qu'**il s'agit d'un appât paraffiné.

6. Un appât rodenticide, selon la revendication 5, **caractérisé en ce qu'**il est obtenu par extrusion de paraffine.

7. Un appât rodenticide, selon n'importe lesquelles des revendications 1 à 4, **caractérisé en ce qu'**il s'agit d'un appât en pâte.

8. Un appât rodenticide, selon n'importe lesquelles des revendications 1 à 4, **caractérisé en ce qu'**il se présente sous la forme de grains, de flocons, de composite et de mélanges de ceux-ci.

9. Un appât rodenticide, selon n'importe lesquelles des revendications 1 à 8, **caractérisé par** l'inclusion en outre d'une ou plusieurs substances sélectionnées parmi les additifs, les édulcorants, les colorants, les matières grasses, les fibres et des mélanges de ceux-ci.

10. Utilisation de bromadiolone et de difénacoum pour la production d'une composition synergétique destinée à la dératisation et/ou à la désourisation.

11. Utilisation, selon la revendication 10, dans laquelle la bromadiolone est utilisée dans une quantité allant de 0,0010 à 0,0040 % en poids et le difénacoum dans une quantité allant de 0,0010 à 0,0040 % en poids.

12. Utilisation, selon la revendication 11, dans laquelle la bromadiolone est utilisée dans une quantité allant de 0,0020 à 0,0030 % en poids et le difénacoum dans une quantité allant de 0,0020 à 0,0030 % en poids.

13. Utilisation, selon la revendication 11 ou la revendication 12, dans laquelle la bromadiolone est utilisée dans une quantité de 0,0025 % en poids et le difénacoum dans une quantité de 0,0025 % en poids.

14. Utilisation, selon n'importe lesquelles des revendications 10 à 13, dans laquelle ladite composition synergétique est un appât paraffiné en bloc ou un appât se présentant sous forme de pâte.

15. Utilisation, selon n'importe lesquelles des revendications 10 à 14, dans laquelle ladite composition comprend en outre au moins un autre anticoagulant à doses multiples sélectionné dans le groupe comprenant la warfarine, le coumachlore, le coumatétralyl, le coumafuryl, le pivaldione, la diphacinone, le chlorophacinone et des mélanges de ceux-ci, ou un anticoagulant à dose unique sélectionné parmi le brodifacoum, la diféthialone, le flocoumafène et des mélanges de ceux-ci ou bien des mélanges d'un anticoagulant à doses multiples et d'un anticoagulant à dose unique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1279334 A1
- GB 2184020 A
- IT MI20080238 A

### Non-patent literature cited in the description

- The Pesticide Manual. 2006